# EUROPEAN PATENT APPLICATION

(11) **EP 3 012 072 A1**
(43) Date of publication of application: **27.04.2016**
(21) Application number: 14813877.9
(22) Date of filing: 09.06.2014
(51) Int. Cl.: B25D 17/08

(54) **EXCHANGEABLE-LOCKING DRILL CHUCK INTEGRATING DRILL FOR BUILDING ENGINEERING WITH STRAIGHT SHANK DRILL**

(30) Priority: 17.06.2013 CN 201310242983; 17.06.2013 CN 201320351244 U
(71) Applicant: SKT Electric Machine Co. Ltd, Zhejiang 321200 (CN)
(72) Inventor: WANG, Wenjiang, Jinhua City Zhejiang 321200 (CN)
(74) Representative: Nordmeyer, Philipp Werner
(86) International application number: PCT/CN2014/079461
(87) International publication number: WO 2014/201955

(57) **Abstract**

Disclosed is an exchangeable-locking drill chuck integrating a drill for building engineering with a straight shank drill, comprising a gripping jaw locking mechanism of the straight shank drill, a locking mechanism of the drill for building engineering, and a gripping jaw self-locking mechanism. A drill chuck body assembly (3) and a gripping jaw locking control panel (15) form a gripping jaw telescopic-locking mechanism. A ferrule (6), a locating ring (12) which is buckled with the ferrule, and a drill chuck puller (5), a drill chuck (10) and a drill chuck spring (7) which are arranged in the locating ring in sequence, as well as a short column (13) which is used for radially limiting the drill chuck form a chisel fastening and locking mechanism. A lower rotation stopping plate (4), an upper rotation stopping plate (11) and the drill chuck body assembly form the gripping jaw self-locking mechanism. The drill chuck shortens the distance to the SDS locking mechanism from a gripping jaw telescoping mechanism, effectively avoids the situation that the drill body shoulder interferes with the chuck when using a large-scale drill, and realizes that the drill for building engineering of more than Φ 12 mm applies to all conditions generally.

## Description

The present application claims the benefit of priorities to Chinese patent application No. 201310242983.5, titled "LOCKING DRILL CHUCK FOR EXCHANGEABLE MASONRY DRILL BIT AND STRAIGHT SHANK DRILL BIT", filed with the Chinese State Intellectual Property Office on June 17, 2013 and Chinese patent application No. 201320351244.5, titled "LOCKING DRIFT. CHUCK FOR EXCHANGEABLE MASONRY DRILL BIT AND STRAIGHT SHANK DRILL BIT", filed with the Chinese State Intellectual Property Office on June 17, 2013, the entire disclosures of which are incorporated herein by reference.

### FIELD

The present application relates to the technical filed of electric tools, particularly to a locking drill chuck for exchangeable masonry drill hit and straight shank drill bit.

### BACKGROUND

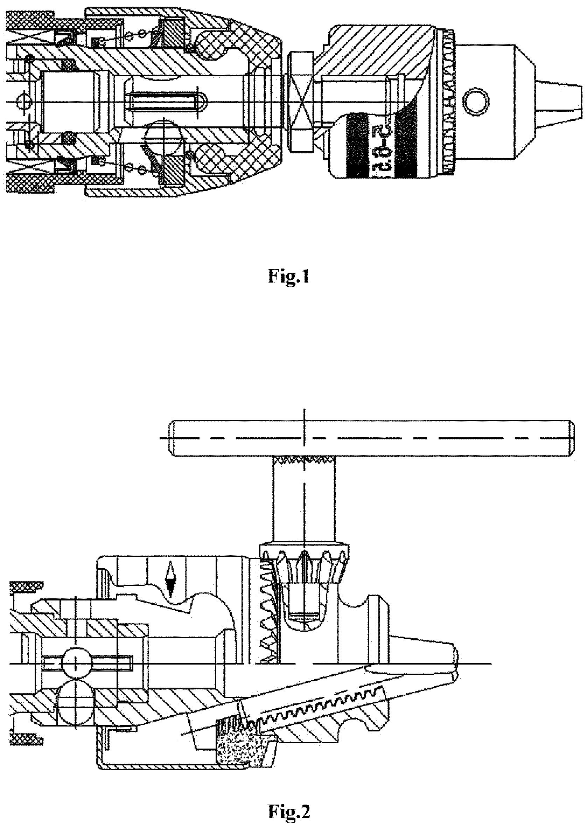

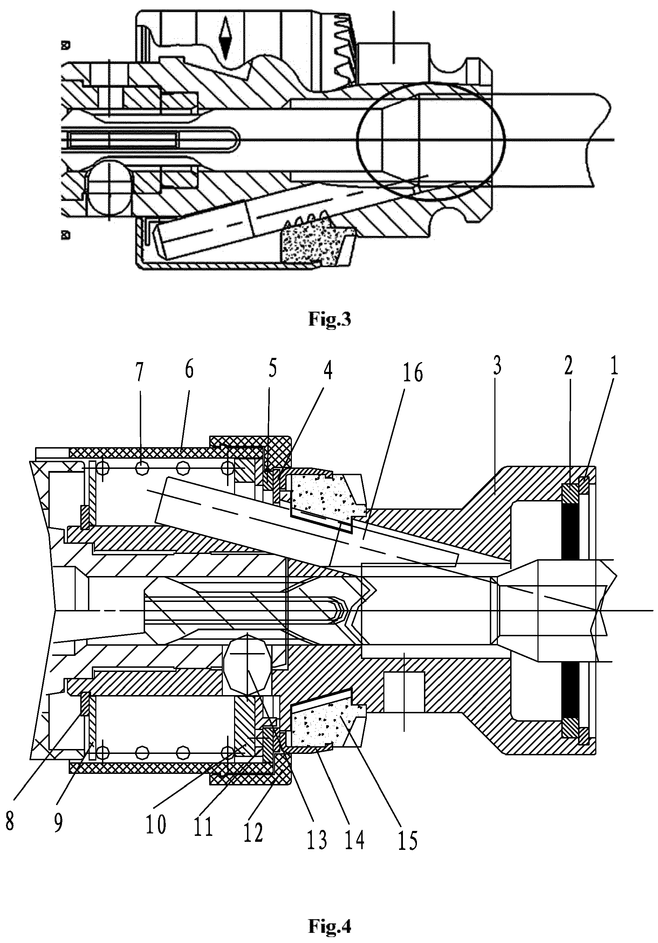

Common electric tools include an electric drill using a straight shank drill bit for drilling, and an electric hammer drill using a masonry drill bit for chiseling. The electric hammer drills generally also have the function of the electric drill, and when acting as the electric drill, the electric hammer drill is equipped with a drill chuck capable of holding a straight shank drill bit. A solution as shown in Figure 1 is commonly used, the drill chuck is locked to a Special Direct System device of the electric hammer drill via a connecting rod (Special Direct System is referred to as SDS hereinafter, which is a clamping manner of the electric hammer drill, and is designed with four or five grooves), and then the straight shank drill bit is locked to the electric hammer drill by three gripping jaws of the drill chuck to realize output. However, this solution has defects of a high ancillary cost, a low output accuracy and an inconvenience in replacing. Figure 2 shows another solution, wherein the drill chuck is directly integrated with the tools, and the structure of this solution may facilitate replacing the drill bits. However, this structure has a complicated locking structure and a long distance between the gripping jaw and the SDS locking mechanism, therefore only a masonry drill bit with a diameter less than 12mm can be attached. As shown in Figure 3, for the masonry drill bit with a diameter greater than 12mm, its drill rod has a diameter larger than that of the drill shank, thus an interference (as shown by an oval portion in the figure) is generated between a shoulder, which is between the drill rod and the drill shank, and the drill chuck. In this case, the drill bit can not be used unless its shank is lengthened, that is, it has to use nonstandard drills.

### SUMMARY

An object of the present application is to provide a locking drill chuck for exchangeable masonry drill bit and straight shank drill bit, wherein a gripping jaw locking structure is compact and a distance between a gripping jaw telescoping mechanism and a SDS locking mechanism is shortened, and a standard masonry drill with a diameter greater than 12mm can be directly used in the drill chuck.

To address the technical issue, the following technical solutions are provided according to the present application.

A locking drill chuck for exchangeable masonry drill bit and straight shank drill bit includes a gripping jaw locking mechanism for the straight shank drill bit, a locking mechanism for the masonry drill, a gripping jaw self-locking mechanism, and a gripping jaw telescopic locking mechanism including a drill chuck body assembly and a gripping jaw locking control disk, wherein, a chiseling locking mechanism is provided and includes a sleeve, a locating ring fastened to the sleeve, and a collar shifter, a collar, a collar spring which are arranged in the locating ring in sequence, and a short column which is configured to be radially limited by the collar; and the gripping jaw self-locking mechanism includes a lower rotation stopping plate, an upper rotation stopping plate and the drill chuck body assembly.

As a preferable solution, the lower rotation stopping plate is welded to the connecting sleeve in the drill chuck body assembly, and is provided with a plurality of self-locking grooves configured to retain self-locking buckles of the upper rotation stopping plate, to realize the self-locking function.

As a preferable solution, the self-locking grooves of the lower rotation stopping plate are continuously arranged in a circumferential direction, and two to four of the self-locking buckles of the upper rotation stopping plate are uniformly arranged in the circumferential direction at positions corresponding to the self-locking grooves of the lower rotation stopping plate.

As a preferable solution, the locating ring and the collar shifter are interlocked in a circumferential direction, and a plurality of small protrusions on the collar shifter are configured to be wedged into corresponding holes on the upper rotation stopping plate to make the upper rotation stopping plate to move axially, to wedge the self-locking buckles into the self-locking grooves of the lower rotation stopping plate to realize the buckling and self-locking function.

As a preferable solution, an end portion of the drill chuck is further provided with a dustproof mechanism, and the dustproof mechanism includes an elastic retaining ring for hole and a dustproof brush.

The present application effectively shortens the distance between the gripping jaw telescopic mechanism and an SDS locking mechanism, avoids interference between a shoulder portion of the drill body and the chuck when a drill bit with a large specification is used, and is applicable for the masonry drill bit with a diameter greater than 12mm.

### BRIEF DESCRIPTION OF THE DRAWINGS

Figure 1 is a schematic view showing connecting a drill chuck via a connecting rod in a conventional manner;
Figure 2 is a schematic view showing a conventional drill chuck being integrated with tools;
Figure 3 is a schematic view showing an interference between the drill chuck and a shoulder of a drill bit when a masonry drill bit with a larger size is clamped in the structure shown in Figure 2;
Figure 4 is a schematic view showing the structure of the present application; and
Figure 5 is an exploded view of the present application.

### Reference numerals in the Figures:

| | |
|---|---|
| 1. elastic retaining ring for hole; | 2. dustproof brush; |
| 3. drill chuck body assembly; | 4. lower rotation stopping plate; |
| 5. collar shifter; | 6. sleeve; |
| 7. collar spring; | 8. elastic retaining ring for shaft; |
| 9. flat washer; | 10. collar; |
| 11. upper rotation stopping plate; | 12. locating ring; |
| 13. short column; | 14. connecting sleeve; |
| 15. gripping jaw locking control disk; and | 16. gripping jaw. |

### DETAILED DESCRIPTION OF THE EMBODIMENTS

The present application is further described in detail in conjunction with the drawings.

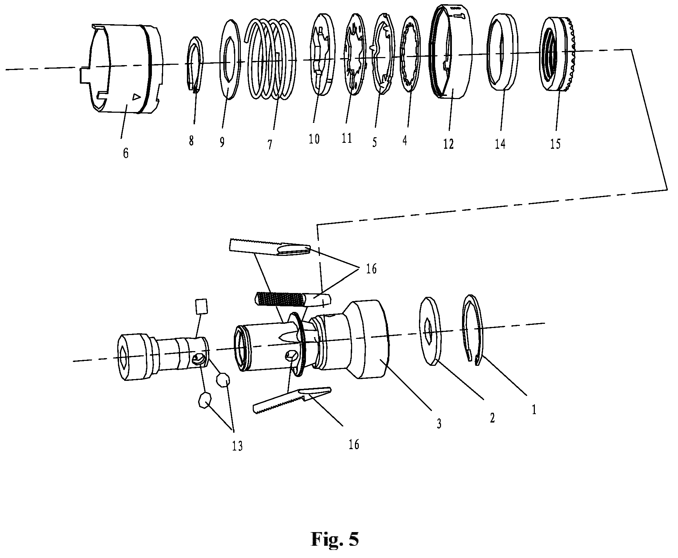

As shown in Figure 5, a locking drill chuck for exchangeable masonry drill bit and straight shank drill bit includes four parts, that is, a gripping jaw locking mechanism for the straight shank drill bit, a locking mechanism for the masonry drill bit, a gripping jaw self-locking mechanism, and a dustproof mechanism. As shown in Figure 5, a drill chuck body assembly 3 and a gripping jaw locking control disk 15 form a gripping jaw telescopic locking mechanism; a collar shifter 5, a sleeve 6, a collar spring 7, a collar 10, a locating ring 12 and a short column 13 form a chiseling locking mechanism. In Figure 5, a lower rotation stopping plate 4, an upper rotation stopping plate 11 and the drill chuck body assembly 3 form the gripping jaw self-locking mechanism, and an elastic retaining ring for hole 1, a dustproof brush 2 and a drill body of the drill bit form the dustproof mechanism.

As shown in Figure 5, when the sleeve 6 is pushed to move axially, the locating ring 12 connected to the sleeve 6 via a buckling mechanism is pulled by the sleeve 6 to move axially, and during the axial movement, the locating ring 12 pushes the collar shifter 5, the upper rotation stopping plate 11 and the collar 10 to move and compresses the collar spring 7 at the same time, and at this time, the short columns 13 can be pushed to move outwards in a radial direction by inserting or pulling out the masonry drill bit, thereby realizing the object of removing or inserting the drill hit. In the case that the drill bit is inserted and the sleeve 6 is released, the collar 10 may move axially reversely due to the pushing force of the spring, and during the movement, the collar 10 pushes the short columns 13 to slide inwards to be wedged into drill bit self-locking grooves, thereby realizing a whole returning of the mechanism, and the locking of the chiseling function of the drill bit is realized as shown in Figure 5.

As shown in Figure 5, after the chiseling function of the drill chuck is locked, the gripping jaws 16 should be at a released position to allow the drill bit to slide axially. In this process, screw threads, which controls the gripping jaws 16, may be moved due to the vibration in the operation of the electric tool, which causes the gripping jaws 16 to clamp the masonry drill bit, interfere with the axial movement of the drill bit and break the drill chuck or the electric tool. The following solution is provided to solve this issue. A buckling self-locking mechanism, which is formed by the drill chuck body assembly 3, the lower rotation stopping plate 4, the collar shifter 5 and the upper rotation stopping plate 11 shown in Figure 5, is provided to realize the self-locking and immobilizing function of the gripping jaws 16. The function is described as follows. The lower rotation stopping plate 4 and a connecting sleeve 14 in the drill chuck body assembly 3 are welded together, and the lower rotation stopping plate 4 is provided with several self-locking grooves for retaining the self-locking buckles of the upper rotation stopping plate 11, to realize the self-locking function. The specific movement is described as follows. After the clamped drill bit is released by the three-jaw telescopic mechanism, it is possible that three self-locking buckles of the upper rotation stopping plate 11 have not been buckled into the lower rotation stopping plate 4, in this case, the locating ring 12 may be rotated manually to drive the collar shifter 5 to move circumferentially to wedge three small protrusions on the collar shifter 5 into three holes on the upper rotation stopping plate 11, to make the upper rotation stopping plate 11 to move axially, thereby wedging the self-locking buckles into the self-locking grooves of the lower rotation stopping plate 4 and realizing the buckling and self-locking function.

As shown in Figure 5, the locking manner of the straight shank drill bit is described as follows. The sleeve 6 is pulled to rotate by an angle to exit the self-locking mechanism, the straight shank drill bit is installed, then the gripping jaw locking control disk 15 in the drill chuck body assembly 3 is rotated by a drill chuck key to lock the straight shank drill bit, and at the same time the self-locking mechanism is restored to prevent the drill bit from being loosened.

The locking of the drill bits with various dimensions can be realized by adjusting the size of the drill chuck body assembly 3, thereby meeting the using requirement for locking a drill bit with a larger specification.

## Claims

1. A locking drill chuck for exchangeable masonry drill bit and straight shank drill bit, comprising a gripping jaw locking mechanism for the straight shank drill bit, a locking mechanism for the masonry drill, a gripping jaw self-locking mechanism, and a gripping jaw telescopic locking mechanism comprising a drill chuck body assembly and a gripping jaw locking control disk, wherein, a chiseling locking mechanism is provided and comprises a sleeve (6), a locating ring (12) fastened to the sleeve (6), and a collar shifter (5), a collar (10), a collar spring (7) which are arranged in the locating ring (12) in sequence, and a short column (13) which is configured to be radially limited by the collar (10); and the gripping jaw self-locking mechanism comprises a lower rotation stopping plate (4), an upper rotation stopping plate (11) and the drill chuck body assembly (3).

2. The locking drill chuck for exchangeable masonry drill bit and straight shank drill bit according to claim 1, wherein the drill chuck body assembly (3) comprises a connecting sleeve (14), the lower rotation stopping plate (4) is welded to the connecting sleeve (14) and is provided with a plurality of self-locking grooves, and the upper rotation stopping plate (11) is provided with self-locking buckles corresponding to the self-locking grooves of the lower rotation stopping plate (4).

3. The locking drill chuck for exchangeable masonry drill bit and straight shank drill bit according to claim 2, wherein the self-locking grooves of the lower rotation stopping plate (4) are continuously arranged in a circumferential direction, and two to four of the self-locking buckles of the upper rotation stopping plate (11) are uniformly arranged in the circumferential direction at positions corresponding to the self-locking grooves of the lower rotation stopping plate (4).

4. The locking drill chuck for exchangeable masonry drill bit and straight shank drill bit according to claim 1, wherein the locating ring (12) and the collar shifter (5) are interlocked in a circumferential direction, and a plurality of small protrusions on the collar shifter (5) are configured to be wedged into corresponding holes on the upper rotation stopping plate (11).

5. The locking drill chuck for exchangeable masonry drill bit and straight shank drill bit according to claim 1, wherein an end portion of the drill chuck is further provided with a dustproof mechanism, and the dustproof mechanism comprises an elastic retaining ring for hole (1) and a dustproof brush (2).
